# EUROPÄISCHE PATENTSCHRIFT

(11) **EP 1 436 518 B1**
(45) Veröffentlichungstag und Bekanntmachung des Hinweises auf die Patenterteilung: **14.04.2010**
(21) Anmeldenummer: 02758434.1
(22) Anmeldetag: 06.08.2002
(51) Int. Cl.: F16D 25/0638, F16D 23/12, F16D 13/72, F16D 48/06, F16D 13/64

(54) **KUPPLUNGSANORDNUNG**
CLUTCH ARRANGEMENT
SYSTEME D'EMBRAYAGE

(30) Priorität: 19.10.2001 DE 10151632
(43) Veröffentlichungstag der Anmeldung: 14.07.2004
(73) Patentinhaber: ZF Sachs AG, 97424 Schweinfurt (DE)
(72) Erfinder: SUDAU, Jörg, 97464 Niederwerrn (DE)
(86) Internationale Anmeldenummer: PCT/EP2002/008753
(87) Internationale Veröffentlichungsnummer: WO 2003/036118

(56) Entgegenhaltungen:
- DE-A- 10 060 684
- DE-A- 10 200 991
- DE-C- 819 186
- GB-A- 2 010 422
- US-A- 4 238 017
- US-A- 4 724 942
- US-A- 5 810 142
- US-A- 6 062 367

## Beschreibung

### Technisches Gebiet

Die vorliegende Erfindung betrifft eine Kupplungsanordnung, insbesondere für ein Kraftfahrzeug, umfassend eine mit Fluid gefüllte oder füllbare Gehäuseanordnung, in welcher mit der Gehäuseanordnung einerseits und einer Abtriebswelle andererseits zur Drehung verbindbare oder verbundene Reiborgane in Reibwechselwirkung gebracht werden können.

### Stand der Technik

Bei derartigen Kupplungsanordnungen, welche auch als sogenannte nasslaufende Kupplungen bekannt sind, sind im allgemeinen mehrere Fluidströmungsbereiche vorgesehen,-über welche einerseits das die reibend wirksam werdenden Bereiche umströmende und dabei auch kühlende Fluid zu- bzw. abgeführt wird, und andererseits durch Fluidzufuhr bzw. Fluidabfuhr Einrückvorgänge bzw. Ausrückvorgänge vorgenommen werden. Dies bedingt die Bereithaltung verschiedener Strömungswege, was zu einem auch hinsichtlich der erforderlichen Abdichtung häufig komplexen Aufbau führt. Überdies erfordert ein Aufbau, bei welchem sowohl die Kühlwirkung als auch die Betätigung beispielsweise nach Art sogenannter 3-Leitungssysteme vorgenommen wird, das Bereithalten einer entsprechenden Pumpanordnung in einem Getriebe, welche dazu in der Lage ist, die geforderte Menge des als Arbeitsfluid eingesetzten Öls bereitstellen zu können.

Einfacher ist eine durch die US 5,810,142 A bekannte Kupplungsanordnung aufgebaut. Diese verfügt über Reiborgane zwischen einer Gehäuseanordnung und einer Welle, einen Fluidzuführbereich zum Einleiten von Fluid in einen die Reiborgane aufnehmenden Raumbereich der Gehäuseanordnung sowie einen Fluidabführbereich zum Ableiten des Fluids aus dem vorgenannten Raumbereich. Die Reiborgane stehen über einen axial verlagerbaren Kolben in Wirkverbindung mit Axialfedem, durch welche die Reiborgane in Reibeingriff untereinander gehalten sind, also in Einrückposition der Kupplungsanordnung. Zum Ausrücken wird der Raumbereich über den Fluidzuführbereich mit Überdruck beaufschlagt, und dadurch der Kolben gegen die Wirkung der Axialfedern von den Reiborganen getrennt.

Auch die DE-PS 819 186 zeigt eine vereinfacht aufgebaute Kupplungsanordnung, bei welcher Axialfedern vorgesehen sind, um Reiborgane in Einrückposition zu halten, während zum Einstellen der Ausrückposition Druck über einen Druckluft-Zuführbereich aufgebaut werden muss, um die Wirkung der Axialfedern zu überwinden.

In der DE 100 60 684 A1 ist eine Bremse behandelt, die über einen in einer Gehäuseanordnung vorgesehenen Raumbereich verfügt, in welchem Reiborgane vorgesehen sind. Diese können durch eine Hydraulikeinrichtung druckabhängig ein- oder ausgerückt werden, wobei das Ausrücken gegen die Wirkung von Axialfedern erfolgt. Die Axialfedern sollen insbesondere sicher stellen, dass bei einem Defekt an der Hydraulikeinrichtung die Reiborgane eingerückt gehalten sind und die Bremse demnach betriebsbereit bleibt.

### Aufgabe der Erfindung

Es ist die Aufgabe der vorliegenden Erfindung, eine Kupplungsanordnung bereitzustellen, bei welcher ohne Nutzung von eine ausreichende Kühlung der reibend wirksamen Bereiche bewirkenden Fluidzuführ- oder Fluidabführbereiche ein- und ausgerückt werden kann.

### Darstellung der Erfindung

Gemäß der vorliegenden Erfindung wird diese Aufgabe gelöst durch eine Kupplungsanordnung, insbesondere für ein Kraftfahrzeug, umfassend eine mit Fluid gefüllte oder füllbare Gehäuseanordnung, wenigstens ein mit der Gehäuseanordnung zur gemeinsamen Drehung verbundenes erstes Reiborgan, wenigstens ein mit einer Abtriebswelle zur gemeinsamen Drehung verbundenes oder verbindbares zweites Reiborgan, einen Fluidzuführbereich zum Einleiten von Fluid in einen Raumbereich der Gehäuseanordnung, in welchem die ersten und zweiten Reiborgane wirksam sind, einen Fluidabführbereich zum Ableiten von Fluid aus dem Raumbereich, sowie einen Kraftspeicher, durch welchen die ersten und zweiten Reiborgane in Reibwechselwirkung vorgespannt sind.

Bei der erfindungsgemäß ausgestalteten Kupplungsanordnung wird also durch Durchströmung des die reibend wirksam werdenden Oberflächenbereiche enthaltenden Raumbereichs mit Arbeitsfluid für eine ausreichende Kühlung gesorgt. Die Betätigung erfolgt jedoch nach Art einer herkömmlich aufgebauten Trockenreibkupplung, bei welcher die Einrückkraft durch einen Kraftspeicher erzeugt wird. Es kann somit auf das Bereitstellen einer kupplungsintemen Fluidzuführleitung, über welche zusätzlich zu den für den Fluidaustausch genutzten Leitungsbereichen das zur Durchführung von Ein- bzw. Ausrückvorgängen eingesetzte Fluid zuzuführen ist, verzichtet werden.

Bei der erfindungsgemäßen Kupplungsanordnung kann dann eine im Wesentlichen außerhalb der Gehäuseanordnung vorgesehene Betätigungsanordnung vorgesehen sein, durch welche der Kraftspeicher zur Durchführung von Ausrückvorgängen beaufschlagbar ist. Dies bedeutet letztendlich, dass bei der erfindungsgemäßen Ausgestaltung der Kupplungsanordnung eine nasslaufende Kupplung mit einem herkömmlichen Ausrückersystem, wie es bei Trockenreibkupplungen zum Einsatz kommen kann, kombiniert wird.

Um die Kraftübertragung von einem Kraftspeicher auf die in einem mit Fluid befüllten Gehäuse vorgesehenen Reiborgane vorsehen zu können, ist ein die Vorspannwirkung zwischen dem Kraftspeicher und den Reiborganen übertragendes ringartiges, bezüglich der Gehäuseanordnung im Wesentlichen fluiddicht verschiebbares Beaufschlagungsorgan vorgesehen, auf welches die Vorspannwirkung des Kraftspeichers über eine Mehrzahl von die Gehäuseanordnung durchsetzenden Kraftübertragungsabschnitten übertragbar ist.

Die vorliegende Erfindung wird nachfolgend mit Bezug auf die beiliegenden Zeichnungen anhand bevorzugter Ausgestaltungsformen detailliert beschrieben. Es zeigen:
- Fig. 1: eine Teil-Längsschnittansicht einer ersten Ausgestaltungsform einer erfindungsgemäßen Kupplungsanordnung;
- Fig. 2: eine der Fig. 1 entsprechende Ansicht einer Abwandlung der ersten Ausgestaltungsform;
- Fig. 3: eine weitere der Fig. 1 entsprechende Ansicht einer Abwandlung der in Fig. 1 dargestellten Ausgestaltungsform;

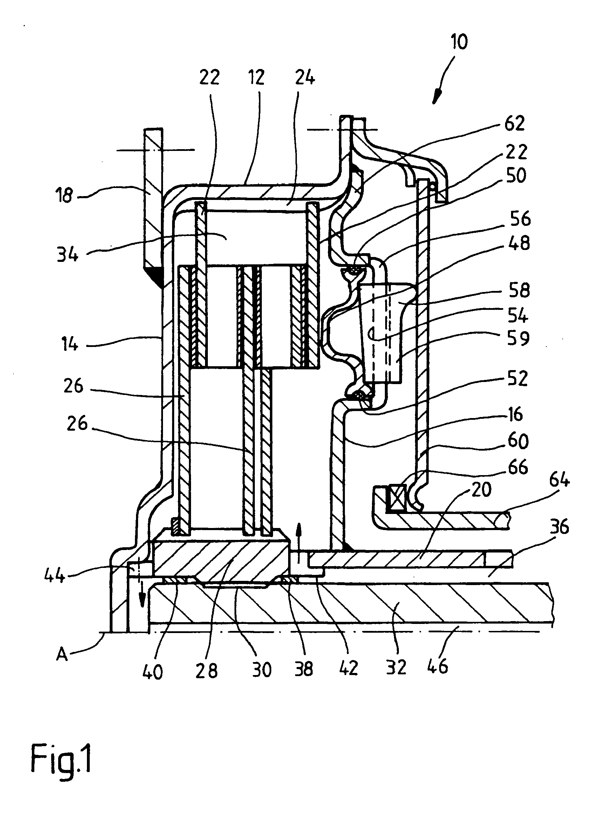

In Fig. 1 ist eine erfindungsgemäße Kupplungsanordnung allgemein mit 10 bezeichnet. Diese umfasst eine Gehäuseanordnung 12 mit einem ersten einem Antriebsaggregat zugewandt zu positionierenden topfartig geformten Gehäuseteil 14 und einem zweiten getriebenah zu positionierenden Gehäuseteil 16. Über das erste Gehäuseteil 14 kann vermittels verschiedener Ankoppelelemente 18 eine Drehankopplung an eine Antriebswelle erfolgen. Das zweite Gehäuseteil 16 ist in seinem radial inneren Bereich mit einer auch als Pumpennabe bezeichneten Gehäusenabe 20 fest verbunden. Diese Pumpennabe greift in ein Getriebe ein und treibt dort eine zur Fluidförderung eingesetzte Fluidpumpe an. In der Gehäuseanordnung 12 sind Lamellen 22 als erste Reiborgane vorgesehen, die in ihrem radial äußeren Bereich mit einer am Gehäuse 12 beispielsweise angeformten Verzahnung 24 in Drehmitnahmeeingriff stehen, bezüglich der Gehäuseanordnung 12 jedoch axial verlagerbar sind. Ferner sind Lamellen 26 als zweite Reiborgane vorgesehen, die in ihrem radial inneren Bereich mit einer Abtriebsnabe 28 drehfest, bezüglich dieser jedoch axial verlagerbar gekoppelt sind. In ihren einander radial und in Umfangsrichtung überlappenden Bereichen können die Lamellen 22, 26 in gegenseitige Reibanlage gebracht werden, um eine Drehmomentübertragungsverbindung zwischen der Gehäuseanordnung 12 und einer mit der Abtriebsnabe 28 durch entsprechende Keilverzahnungen 30 in drehfeste Verbindung bringbaren Abtriebsnabe 32 herstellen. Dazu können an zumindest einem Teil der Lamellen 22, 26 Reibbeläge oder entsprechende reibverstärkende Oberflächenbeschichtungen vorgesehen sein.

Der Innenraum 34 der Gehäuseanordnung 12, in welchem die Lamellen 22, 26 mit ihren entsprechenden Oberflächenbereichen in gegenseitige Reibanlage gelangen können, ist zumindest im Fahrbetrieb wenigstens teilweise mit einem Arbeitsfluid, also beispielsweise vom Getriebe herangefördertem Öl, gefüllt. Dabei kann durch einen zwischen der als Hohlwelle ausgebildeten Gehäusenabe 20 und der Abtriebswelle 32, welche im Allgemeinen eine Getriebeeingangswelle ist, gebildeten Zwischenraum 36 das Fluid herangefördert werden und in den Innenraum 34 gelangen. Um hier für definierte Strömungsverhältnisse zu sorgen, können zwischen der Abtriebswelle 32 und der Abtriebsnabe 28 Dichtungselemente 38, 40 wirksam sein. Ein an der getriebenahen Seite die axiale Lagerung der Abtriebsnabe 20 vorgesehenes Lagerungselement 42 kann an verschiedenen Umfangspositionen Durchtrittsbereiche für das über den Zwischenraum 36 heranströmende Fluid aufweisen. Auch an der anderen axialen Seite ist die Abtriebsnabe 28 über ein Lagerungselement 44 axial bezüglich der Gehäuseanordnung 12 abgestützt. Es sei darauf hingewiesen, dass die Lagerungselemente 42, 44 beispielsweise als Gleitlagerungselemente ausgebildet sein können. Auch das Lagerungselement 44 weist an verschiedenen Umfangspositionen Durchtrittsbereiche auf, über welche das den Innenraum 34 verlassende Fluid nach radial innen strömen kann, um dann über eine zentrale Öffnung 46 der Abtriebswelle 32 abgezogen und beispielsweise wieder in das Getriebe gefördert zu werden. Es sei bereits hier darauf hingewiesen, dass die Strömungsrichtung des Fluids auch umgekehrt zu der vorangehend beschriebenen sein kann. Dies kann, wie im Folgenden auch noch detailliert beschrieben, auch davon abhängig gemacht werden, ob die Kupplungsanordnung 10 insbesondere dann, wenn sie in einem Schlupfzustand ist, im Zugbetrieb arbeitet, d.h. vom Antriebsaggregat ein Drehmoment auf die Abtriebswelle 32 übertragen wird, oder im Schubbetrieb arbeitet, d.h. von der Antriebswelle 32 ein Drehmoment in Richtung Antriebsaggregat übertragen wird, was beispielsweise im Motorbremszustand der Fall sein kann.

Zur Erlangung der angesprochenen Reibwechselwirkung ist in der Gehäuseanordnung 12 ein beispielsweise ringartig ausgebildeter Beaufschlagungskolben 48 vorgesehen. Diesem Beaufschlagungskolben 48 zugeordnet weist das Gehäuseteil 16 eine ringartig um eine Drehachse A umlaufende, topfartige Vertiefung 54 auf, an welcher radial innen und radial außen der Beaufschlagungskolben 48 unter Zwischenlagerung von Dichtungselementen 50, 52 fluiddicht in Richtung der Drehachse A verschiebbar geführt ist. An mehreren Umfangspositionen ist die angesprochene ringartige Vertiefung 54 in dem Gehäuseteil 16 mit Aussparungen 56 versehen. Diese Aussparungen 56 sind von jeweiligen Kraftübertragungsorganen 58 durchsetzt, die einerseits an dem Beaufschlagungskolben 48 abgestützt sind und andererseits unter der Krafteinwirkung eines beispielsweise als Membranfeder oder Tellerfeder ausgebildeten Kraftspeichers 60 stehen. Die einzelnen Beaufschlagungsorgane 58 können durch einen außerhalb der Gehäuseanordnung 12 liegenden, ringartig umlaufenden Bereich 59 miteinander integral verbunden sein. Der Kraftspeicher 60 ist radial außen an einem beispielsweise mit dem Gehäuseteil 14 fest verbundenen Abstützelement 62 abgestützt und beaufschlagt in seinem radial mittleren Bereich die Kraftübertragungsorgane 58. Am radial inneren Bereich dieses Kraftspeichers 60 greift dann ein nur schematisch dargestellter Betätigungsmechanismus 64 über ein Drehentkopplungslager 66 an. Dieser Betätigungsmechanismus 64 kann nach Art eines auch bei Trockenreibkupplungen eingesetzten Ausrückersystems aufgebaut sein. Hier können also herkömmliche Ausrückergabeln, Geber/Nehmer-Zylindersysteme, Spindeltriebe o. dgl. zum Einsatz gelangen.

Durch die Vorspannkraft des Kraftspeichers 60 wird über die Kraftübertragungsorgane 58 der Beaufschlagungskolben 48 gegen die Lamellen 22, 26 gepresst. Dabei werden auch die Lamellen 22, 26 gegeneinander bzw. an der vom Beaufschlagungskolben 48 abgewandten axialen Seite gegen die Gehäuseanordnung 12 gepresst. Auf diese Art und Weise ist der Einrückzustand hergestellt. Zum Übergang in einen zumindest teilweise ausgerückten Zustand kann dann im dargestellten Beispiel an dem Kraftspeicher 60 radial innen ziehend angegriffen werden, um die Beaufschlagungswirkung aufzuheben bzw. zumindest teilweise zu mindern.

Bei dem in Fig. 1 dargestellten System ist es nicht erforderlich, zur Durchführung von Ein- bzw. Ausrückvorgängen Druckfluid zuzuführen, so dass eine hierfür speziell vorgesehene Kanalanordnung nicht erforderlich ist. Dies vereinfacht den Aufbau der erfindungsgemäßen Kupplungsanordnung.

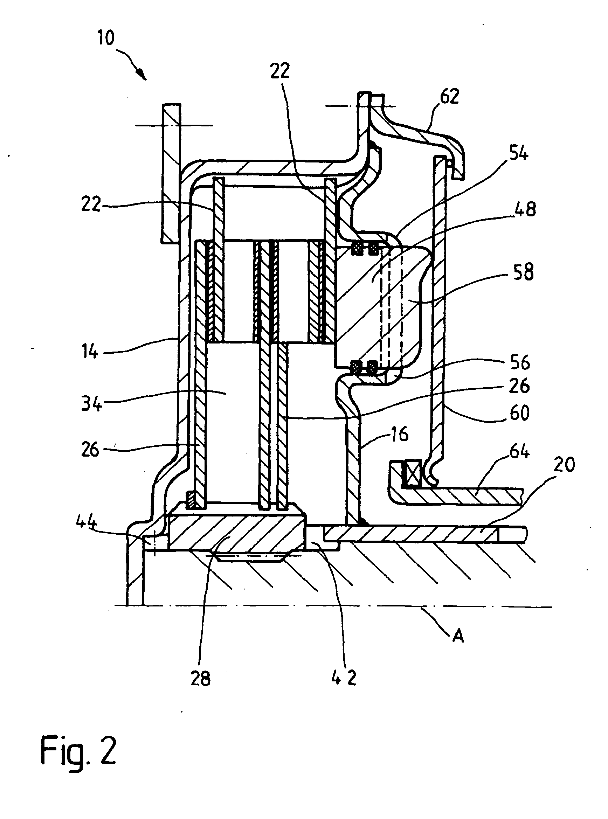

Eine Abwandlung der in Fig. 1 dargestellten Kupplungsanordnung 10 ist in Fig. 2 gezeigt. Es wird im Folgenden lediglich auf die konstruktiven Unterschiede eingegangen.

Man erkennt hier, dass der Beaufschlagungskolben 48 die Kraftübertragungsorgane 58 als integrale Bestandteile trägt. Während also bei der Ausgestaltungsform gemäß Fig. 1 der Beaufschlagungskolben 48 beispielsweise durch Umformen eines Blechrohlings gebildet werden kann, an den radial außen und radial innen Einsenkungen zur Aufnahme der Dichtungsorgane angeformt werden können, kann der in Fig. 2 erkennbare Beaufschlagungskolben 48 beispielsweise in einem Gussverfahren oder/und durch spanabhebende Bearbeitung hergestellt werden. Ein Vorteil des in Fig. 2 dargestellten Beaufschlagungskolbens 48 ist, dass durch integrale Ausbildung mit den Kraftübertragungsorganen 58 hier gleichzeitig eine Drehmitnahmekopplung bezüglich des Gehäuseteils 16 bereitgestellt werden kann. Um dies bei der Ausgestaltungsform gemäß Fig. 1 zu erlangen, müssen die separat ausgebildeten Beaufschlagungsorgane 58 beispielsweise mit dem Beaufschlagungskolben 48 durch Verklebung, Verschweißung o. dgl. fest verbunden werden.

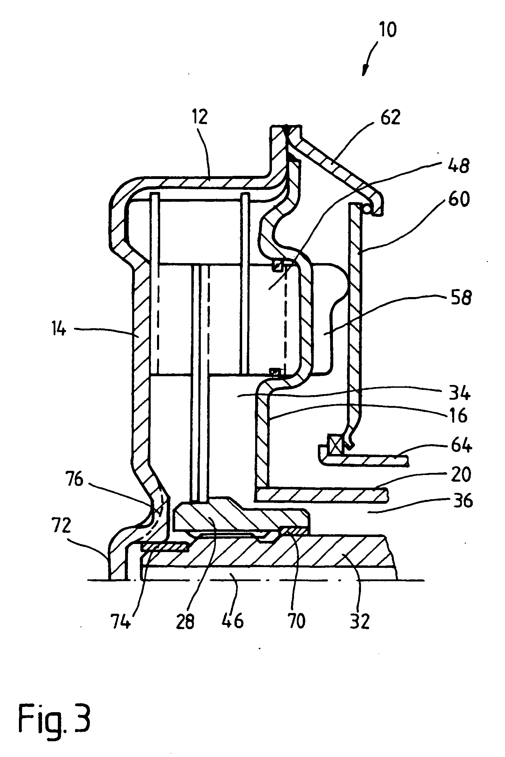

In Fig. 3 ist eine Ausgestaltungsform der erfindungsgemäßen Kupplungsanordnung 10 dargestellt, bei welcher die Abtriebsnabe 30 an der Abtriebswelle 32 durch eine Lagerung 70 in radialer Richtung und ggf. auch in axialer Richtung gelagert ist. Insbesondere dann, wenn diese Lagerung 70 wieder als Gleitlagerelement ausgebildet ist, kann diese gleichzeitig auch die vorangehend bereits angesprochene Dichtungsfunktion erfüllen, so dass das über den Raumbereich 36 zugeführte Fluid definiert in den Innenraum 34 gelangt.

Die Gehäuseanordnung 12 ist im radial inneren Bereich des Gehäuseteils 14 mit einer topfartigen Einsenkung 72 desselben unter Zwischenlagerung einer weiteren Lagerung 74 ebenfalls an der Abtriebswelle 32 zumindest in radialer Richtung gelagert. Auch hier kann die beispielsweise als Gleitlagerring aufgebaute Lagerung 74 wieder eine Dichtungsfunktion vorsehen, so dass über durch Umformung gebildete Fluidströmungsbereiche 76 das den Innenraum 34 verlassende Fluid in die zentrale Öffnung 46 der Abtriebswelle 32 gelangen kann. Auch hier kann selbstverständlich die umgekehrte Fluidströmungsrichtung vorgesehen sein.

## Patentansprüche

1. Kupplungsanordnung, insbesondere für ein Kraftfahrzeug, umfassend:
- eine mit Fluid gefüllte oder füllbare Gehäuseanordnung (12; 12a),
- wenigstens ein mit der Gehäuseanordnung (12; 12a) zur gemeinsamen Drehung verbundenes erstes Reiborgan (22; 22a),
- wenigstens ein mit einer Abtriebswelle (32; 32a) zur gemeinsamen Drehung verbundenes oder verbindbares zweites Reiborgan (26; 26a),
- einen Fluidzuführbereich zum Einleiten von Fluid in einen Raumbereich (34; 34a) der Gehäuseanordnung (12; 12a), in welchem die ersten und zweiten Reiborgane (22, 26; 22a, 26a) wirksam sind,
- einen Fluidabführbereich zum Ableiten von Fluid aus dem Raumbereich (34; 34a),
- einen Kraftspeicher (60; 60a), durch welchen die ersten und zweiten Reiborgane (22, 26; 22a, 26a) in Reibwechselwirkung vorgespannt sind,
- ein die Vorspannwirkung zwischen dem Kraftspeicher (60) und den Reiborganen (22, 26) übertragendes ringartiges, bezüglich der Gehäuseanordnung (12) im Wesentlichen fluiddicht verschiebbares Beaufschlagungsorgan (48),
**gekennzeichnet durch** eine im Wesentlichen außerhalb der Gehäuseanordnung (12) vorgesehene Betätigungsanordnung (64), **durch** welche der Kraftspeicher (60) zur Durchführung von Ausrückvorgängen beaufschlagbar ist, und **durch** eine Mehrzahl von Kraftübertragungsabschnitten (58), welche die Gehäuseanordnung (12) durchsetzen, und über welche die Vorspannwirkung des Kraftspeichers (60) auf das Beaufschlagungsorgan (48) übertragbar ist.

## Claims

1. Clutch arrangement, in particular for a motor vehicle, comprising:
- a housing arrangement (12; 12a) which is filled or can be filled with fluid,
- at least one first friction element (22; 22a) which is connected to the housing arrangement (12; 12a) for conjoint rotation,
- at least one second friction element (26; 26a) which is connected or can be connected to an output shaft (32; 32a) for conjoint rotation,
- a fluid feed region for introducing fluid into a spatial region (34; 34a) of the housing arrangement (12; 12a), in which spatial region (34; 34a) the first and second friction elements (22, 26; 22a, 26a) are active,
- a fluid discharge region for discharging fluid out of the spatial region (34; 34a),
- a force accumulator (60; 60a), by which the first and second friction elements (22, 26; 22a, 26a) are prestressed in frictional interaction,
- an annular loading element (48) which can be displaced with regard to the housing arrangement (12) in a substantially fluidtight manner and transmits the prestressing action between the force accumulator (60) and the friction elements (22, 26),
**characterized by** an actuating arrangement (64) which is provided substantially outside the housing arrangement (12) and by which the force accumulator (60) can be loaded in order to carry out disengagement operations, and by a plurality of force transmission sections (58) which penetrate the housing arrangement (12) and via which the prestressing action of the force accumulator (60) can be transmitted to the loading element (48).

## Revendications

1. Système d'embrayage, notamment pour un véhicule automobile, comprenant :
- un agencement de boîtier (12 ; 12a) rempli ou pouvant être rempli de fluide,
- au moins un premier organe de friction (22 ; 22a) connecté de manière solidaire en rotation à l'agencement de boîtier (12 ; 12a),
- au moins un deuxième organe de friction (26 ; 26a) connecté ou pouvant être connecté de manière solidaire en rotation à un arbre de sortie (32 ; 32a),
- une région d'alimentation en fluide pour introduire du fluide dans une région de chambre (34 ; 34a) de l'agencement de boîtier (12 ; 12a), dans laquelle les premier et deuxième organes de friction (22, 26 ; 22a, 26a) sont actifs,
- une région d'évacuation de fluide pour évacuer du fluide hors de la région de chambre (34 ; 34a),
- un accumulateur de force (60 ; 60a), grâce auquel les premier et deuxième organes de friction (22, 26 ; 22a, 26a) sont précontraints en interaction de friction,
- un organe de sollicitation (48) de forme annulaire transmettant l'effet de précontrainte entre l'accumulateur de force (60) et les organes de friction (22, 26), déplaçable de manière essentiellement étanche aux fluides par rapport à l'agencement de boîtier (12),
**caractérisé par** un agencement d'actionnement (64) prévu essentiellement en dehors de l'agencement de boîtier (12), par lequel l'accumulateur de force (60) peut être sollicité pour effectuer des opérations de débrayage, et par une pluralité de sections de transfert de force (58) qui traversent l'agencement de boîtier (12) et par lesquelles l'effet de précontrainte de l'accumulateur de force (60) peut être transmis à l'organe de sollicitation (48).
